# EUROPÄISCHE PATENTSCHRIFT

(11) **EP 1 356 887 B1**
(45) Veröffentlichungstag und Bekanntmachung des Hinweises auf die Patenterteilung: **06.06.2007**
(21) Anmeldenummer: 03007568.3
(22) Anmeldetag: 02.04.2003
(51) Int. Cl.: B23D 31/00

(54) **Vorrichtung zum Trennen bandförmigen Halbzeugs mit Sollbruchstellen**
Apparatus for severing band-like semi-finished products having lines of weakness
Dispositif pour sectionner une ébauche en forme de bande ayant des lignes d'affaiblissement

(30) Priorität: 26.04.2002 DE 10218575
(43) Veröffentlichungstag der Anmeldung: 29.10.2003
(73) Patentinhaber: WIELAND-WERKE AG, 89070 Ulm (DE)
(72) Erfinder: Sturm, Hermann, 89287 Bellenberg (DE); Neuhäusler, Wolfgang, 88481 Unterbalzheim (DE); Stöckl, Hans-Jürgen, 89269 Vöhringen (DE)

(56) Entgegenhaltungen:
- DE-A- 1 552 732
- FR-A- 2 385 498
- NL-A- 6 900 462
- US-A- 2 053 375
- US-A- 2 335 334
- US-A- 3 800 648
- US-A- 4 266 458
- PATENT ABSTRACTS OF JAPAN Bd. 0102, Nr. 34 (M-507), 14. August 1986 (1986-08-14) & JP 61 067502 A (SHIGENOBU UENO), 7. April 1986 (1986-04-07)
- PATENT ABSTRACTS OF JAPAN Bd. 0101, Nr. 76 (M-491), 20. Juni 1986 (1986-06-20) & JP 61 025711 A (MITSUBISHI HEAVY IND LTD), 4. Februar 1986 (1986-02-04)

## Beschreibung

Die Erfindung betrifft eine Vorrichtung zum Trennen bandförmigen Halbzeugs mit in Längsrichtung verlaufenden Nuten in einzelne Bandabschnitte nach dem Oberbegriff des Patentanspruchs 1.

Zur Herstellung von Leiterbahnen für Flachbandkabel unterschiedlicher Breite und Dicke wird zumeist zum Coil gewickeltes Blechband in Längsteilanlagen (Scheren) in mehrere Bandstreifen geteilt. Das Trennen erfolgt durch verlustfreies (spanloses) Schneiden mit Kreismessern. Kreismesserscheren mit durchgehender Arbeitswelle werden mit Kreismessern, Rollringen und Distanzhaltern bestückt.

Eine derartige Längsschneidemaschine ist aus der DE 195 03 965 A1 bekannt. Sie besteht aus einer Materialzufuhreinrichtung, einem Schneidabschnitt und einer Aufwickelvorrichtung. Eine Längstrennung dünner Bleche in Streifen erfolgt mit Hilfe von Kreismessern im Schneidabschnitt.

Auch ist aus der Druckschrift DE 1 552 732 A eine solche Streifentrennvorrichtung bekannt, mit welcher aus einem Bandmaterial Streifen in Verbindung mit schmalen randseitigen Abfallstücken geschnitten werden. Die Abfallstücke werden auf Abfallspulen aufgewickelt, die über einer Trennvorrichtung angeordnet sind. Zum Beispiel werden auf diese Weise aus einem Aluminiumband zwei Steifen einer Breite von 152 bis 177 mm geschnitten.

Ein Mangel dieser Verfahren ist der beim Trennen in verschiedenster Ausprägung entstehende Schneidgrat. Auf die Minimierung der Gratbildung wurden deshalb große Anstrengungen verwendet, beispielsweise werden die Grate nachträglich überwalzt. Alternativ werden auch Press- bzw. Ziehprodukte in Drahtform eingesetzt, die von vornherein im gesamten Querschnitt die definierten Geometrien besitzen.

In der nachveröffentlichten deutschen Patentanmeldung 101 63 038.7 wird beschrieben, wie die Nachteile der vorstehend beschriebenen Rollenschnitt-Technik überwunden werden können, ohne hohe Kosten oder geringere Produktivitäten zu verursachen. Hierzu ist vorgesehen, dass ein Halbzeug aus duktilem Material, insbesondere Metall, auf gegenüberliegenden Seiten des Halbzeugs mindestens ein Paar keilförmiger Nuten in gegenseitig fluchtender Ausrichtung aufweist und dass zwischen den Spitzen der keilförmigen Nuten ein Steg vorliegt, dessen Dicke d im Vergleich zur Dicke D des Halbzeugs so gering ist, dass er durch gegensinnige Auslenkung der durch das Nutenpaar abgegrenzten Halbzeugbereiche ohne spanende Verformung mit geringem Kraftaufwand abreißbar ist.

Der Erfindung liegt die Aufgabe zugrunde, eine Vorrichtung zu beschreiben, die es ermöglicht, das insbesondere nach der Patentanmeldung 101 63 038.7 vorbereitete Material in einzelne Bandstreifen zu trennen; dabei soll es möglich sein, die einzelnen Bandstreifen ohne zusätzliche Zwischenschritte (Aufhaspeln o.ä.) weiteren Verarbeitungsstufen zuzuführen, also ohne Einschränkung der Verarbeitungsgeschwindigkeit nachfolgender Prozesse.

Die Aufgabe wird erfindungsgemäß durch eine Vorrichtung mit den Merkmalen des Patentanspruchs 1 gelöst. Bevorzugte Ausführungsformen der Vorrichtung sind Gegenstand der Ansprüche 2 bis 13.

Die Erfindung wird anhand der folgenden Ausführungsbeispiele näher erläutert.
Es zeigt:
- Fig. 1: eine erfindungsgemäße Vorrichtung in Seitenansicht,
- Fig. 2: die Vorrichtung nach Fig. 1 in Draufsicht,
- Fig. 3: einen Vertikalschnitt gemäß Linie A-B der Fig. 1 und
- Fig. 4: schematisch das Detail der Bandauffächerung nach Fig. 3 in vergrößertem Maßstab.

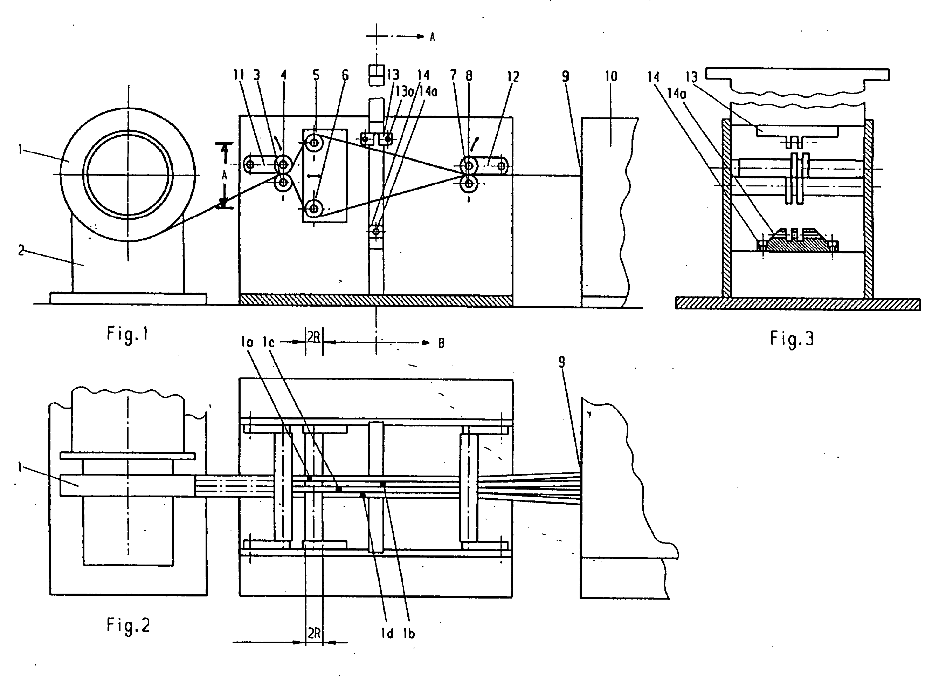

Der beispielsweise aus bandförmigem Halbzeug gemäß Patentanmeldung 101 63 038.7 vorbereitete (in Bandrichtung mindestens einmal gekerbte) Bandwickel 1, insbesondere Bandmaterial aus Metall, befindet sich auf dem Abhaspel 2. Er wird gemäß Fig. 1 durch Zustellrollen 3, 4 geführt. Der Spaltabstand der Zustellrollen 3, 4 kann variiert werden. Durch gegensinnige Auslenkung der durch die Nutenpaare abgegrenzte Halbzeugbereiche werden die so entstehenden Bandstreifen abwechselnd oberhalb der Umlenkrolle 5, der benachbarte Bereich unterhalb der Umlenkrolle 6 geführt und anschließend in den Zustellrollen 7, 8 zusammengeführt. Im vorliegenden Fall von vier Bandstreifen 1a, 1b, 1c, 1d werden die Bandstreifen 1a, 1c oberhalb der Umlenkrolle 5, die Bandstreifen 1 b, 1d unterhalb der Umlenkrolle 6 geführt (siehe insbes. Fig. 2). Der Abstand der Zustellrollen 7, 8 ist ebenfalls variabel ausgeführt.

Die laterale Führung der Bandstreifen 1a, 1b, 1c, 1d wird über geeignete Vorrichtungen am Einlauf 9 für den nächsten Verarbeitungsschritt erreicht (beispielsweise Welle mit Distanzringen). Die so geteilten Halbzeugbereiche (insbesondere Bandstreifen) werden dann weiteren Verarbeitungsstufen 10 (beispielsweise Aufhaspel, Extruder für die Herstellung von Flachbandkabel etc.) zugeführt.

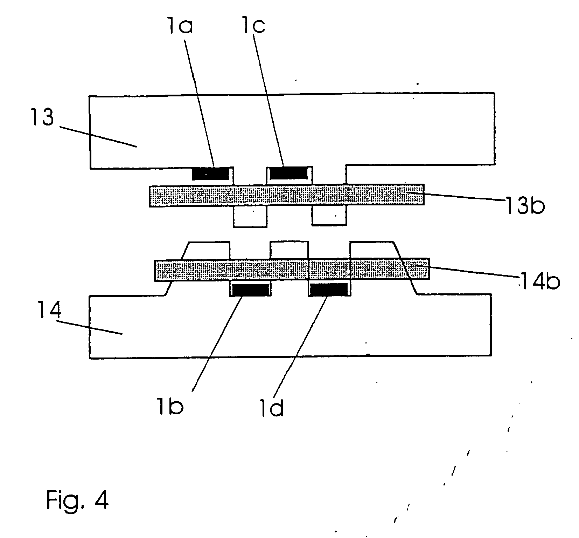

Das Einbringen des Halbzeugs in die Vorrichtung geschieht durch alternierendes Auffächern der Bandstreifen an beliebiger Stelle des Bandes. Dazu wird das Rollenpaar 5, 6 aus der Vorrichtung geschoben und das noch zusammenhängende Halbzeug bis zum Auslauf 9, 10 geführt. Dann wird eine bewegliche, kammförmige Bandauffächerung 13 auf eine starre Bandauffächerung 14 gefahren, die ebenfalls kammartig ausgebildet ist. Die einzelnen Bandstreifen werden abwechselnd von der beweglichen Bandauffächerung 13 nach unten (Bandstreifen 1b,1d), von der starren Bandauffächerung 14 nach oben verschoben (Bandstreifen 1a,1c). Anschließend werden durch die Bohrungen 13a, 14a der Bandauffächerungen 13, 14 Bolzen 13b, 14b zum Rückhalt der Bandstreifen 1a bis 1d beim Auseindanderfahren der beweglichen Bandauffächerung 13 eingeführt (s. insbes. Fig. 4).

Beim darauffolgenden Auseinanderfahren der beweglichen Bandauffächerung 13 werden die Bandstreifen 1a, 1c bzw. 1b, 1d so weit voneinander getrennt, dass das Rollenpaar 5/6 wieder in das bereits aufgefächerte Halbzeug eingeschoben werden kann. Das bietet den Vorteil eines noch zusammenhängenden Bandanfangs und damit ein einfaches Einfädeln in den nächsten Verarbeitungsschritt.

Die Position der Umlenkrollen 5, 6 zwischen den Zustellrollen 3, 4/7, 8 ist veränderbar. Durch Verschieben des Umlenkrollenpaares 5, 6 kann der Abreißwinkel zwischen den Bandstreifen 1a, 1c bzw. 1b, 1d variiert werden (der Winkel zwischen den Bandstreifen 1a, 1c bzw. 1b, 1d und der Horizontalen beträgt dabei jeweils zwischen 10° und 90°).

Die oberen Zustellrollen 4, 8 können mit einer wählbaren kraft auf die unteren Zustellrollen 3, 7 zugestellt werden.

Dies wird erreicht durch die Aufhängung der oberen Zustellrollen 4, 8 über Hebel 11, 12 und Kraftaufbringung durch Spindel (mechanisch), durch Zylinder (pneumatisch), hydraulisch oder elektromagnetisch.

Die Umlenkrollen 5, 6 können konstant motorisch angetrieben, geregelt motorisch angetrieben oder mitlaufend sein. Bei nicht angetriebenen, mitlaufenden Rollen besteht die Gefahr, dass die Oberfläche durch Schlupf (relative Bewegung Oberfläche Band zu Oberfläche Rolle) beschädigt wird. Dem wird dadurch vorgebeugt, dass die Rollen 5; 6 reibungsmaximiert ausgelegt sind (beispilesweise gummierte Oberfläche).
Bei angetriebenen Rollen 5, 6 wird der Motor mittels einer Rutschkupplung an die Rolle gekoppelt. Mit der Rutschkupplung kann das maximale Drehmoment so eingestellt werden, dass ein Schlupf verhindert wird.

Der Abstand A der Umlenkrollen 5, 6 kann variabel ausgeführt sein.

Der Radius R der Umlenkrollen 5, 6 kann variabel ausgeführt sein. Durch die damit veränderbare Umschlingung kann das Abreißverhalten an unterschiedliche Stegdicken des gekerbten Halbzeugs angepaßt werden.

Die eingesetzte Banddicke beträgt üblicherweise 0,005 mm bis 0,3 mm, vorzugsweise 0,035 mm bis 0,25 mm.

## Patentansprüche

1. Vorrichtung zum Trennen eines bandförmigen Halbzeugs mit in Längsrichtung verlaufenden Nuten in einzelne Bandabschnitte, bestehend aus einer einen Wickel (1) bandförmigen Halbzeugs tragenden Abhaspel (2) und einer Abzugseinrichtung (9, 10), wobei zwischen der Abhaspel (2) und der Abzugseinrichtung (9, 10) zwei Paare von Zustellrollen (3, 4 / 7, 8) angeordnet sind, wobei
- zwischen den zwei Paaren von Zustellrollen (3,4/7, 8) ein Paar übereinander angeordneter Umlenkrollen (5, 6) zur gegensinnigen Auslenkung der durch die Nutenpaare abgegrenzten Halbzeugbereiche vorgesehen ist, und die nach einem Abreißen entstehenden Bandstreifen (1a, 1b, 1c, 1d) abwechselnd oberhalb der oberen Umlenkrolle (5), der benachbarte Bereich unterhalb der unteren Umlenkrolle (6) geführt sind, **dadurch gekennzeichnet, dass** die Umlenkrollen (5, 6) seitlich in die Vorrichtung einschiebbar sind, und
- dass zwischen den zwei Paaren von Zustellrollen (3,4/7,8) eine untere starre Bandauffächerung (14) und eine obere, bewegliche Bandauffächerung (13) angeordnet sind, die kammartig ineinander greifen.

2. Vorrichtung nach Anspruch 1, **dadurch gekennzeichnet,**
**dass** der Spaltabstand der Zustellrollen (3, 4/7, 8) jeweils variabel ist.

3. Vorrichtung nach Anspruch 1 oder 2, **dadurch gekennzeichnet,**
**dass** mindestens eine der beiden Zustellrollen (3,4/7,8) mit variabler Kraft gegenüber der anderen Zustellrolle zustellbar ist.

4. Vorrichtung nach Anspruch 3, **dadurch gekennzeichnet,**
**dass** die Aufhängung der oberen Zustellrollen (4, 8) über Hebel (11,12) und die Kraftaufbringung frei wählbar erfolgt.

5. Vorrichtung nach einem oder mehreren der Ansprüche 1 bis 4, **dadurch gekennzeichnet,**
**dass** die Position der Umlenkrollen (5, 6) zwischen den Zustellrollen (3, 4/7, 8) variabel ist.

6. Vorrichtung nach einem oder mehreren der Ansprüche 1 bis 5, **dadurch gekennzeichnet,**
**dass** die Umlenkrollen (5, 6) angetrieben sind.

7. Vorrichtung nach Anspruch 6, **dadurch gekennzeichnet,**
**dass** die Umlenkrollen (5, 6) konstant oder geregelt motorisch angetrieben sind.

8. Vorrichtung nach Anspruch 7, **dadurch gekennzeichnet,**
**dass** ein Motor jeweils über eine Rutschkupplung an die Umlenkrollen (5, 6) angekoppelt ist.

9. Vorrichtung nach einem oder mehreren der Ansprüche 1 bis 5, **dadurch gekennzeichnet,**
**dass** die Umlenkrollen (5, 6) mitlaufend sind.

10. Vorrichtung nach Anspruch 9, **dadurch gekennzeichnet,**
**dass** die Oberflächen der Umlenkrollen (5, 6) reibungsmaximiert ausgebildet sind.

11. Vorrichtung nach einem oder mehreren der Ansprüche 1 bis 10, **dadurch gekennzeichnet,**
**dass** der Abstand A der Umlenkrollen (5, 6) variabel ist.

12. Vorrichtung nach einem oder mehreren der Ansprüche 1 bis 11, **dadurch gekennzeichnet,**
**dass** der Radius R der Umlenkrollen (5, 6) variabel ist.

13. Vorrichtung nach einem der Ansprüche 1 bis 12, **dadurch gekennzeichnet, dass** die Bandauffächerung (13,14) Bohrlöcher (13a, 14a) zur Aufnahme von Bolzen (13b, 14b) aufweisen.

## Claims

1. Apparatus for separating a band-shaped semi-finished product, having grooves extending in the longitudinal direction, into individual band portions, consisting of an unreeling device (2) carrying a reel (1) of band-shaped semi-finished product, and a draw-off device (9, 10), wherein two pairs of feed rollers (3, 4/7, 8) are disposed between the unreeling device (2) and the draw-off device (9, 10), wherein there is provided between the two pairs of feed rollers (3, 4 / 7, 8) a pair of diverting rollers (5, 6) arranged one above the other for diverting in opposite directions the regions of the semi-finished product that are defined by the groove pairs, and the band strips (1a, 1b, 1c, 1d) produced after tearing are passed alternately above the upper diverting roller (5), the adjacent region below the lower diverting roller (6), **characterised in that** the diverting rollers (5, 6) are insertable into the apparatus from the side, and a lower, rigid fanning-out device (14) and an upper, movable fanning-out device (13) which mesh in a comb-like manner are disposed between the two pairs of feed rollers (3, 4 / 7, 8) .

2. Apparatus according to claim 1, **characterised in that** the nip width of the feed rollers (3, 4 / 7, 8) is in each case variable.

3. Apparatus according to claim 1 or 2, **characterised in that** at least one of the two feed rollers (3, 4/7, 8) can be presented with respect to the other feed roller with variable force.

4. Apparatus according to claim 3, **characterised in that** the suspension of the upper feed rollers (4, 8) is effected by way of levers (11, 12) and the application of force in a freely selectable manner.

5. Apparatus according to one or more of claims 1 to 4, **characterised in that** the position of the diverting rollers (5, 6) between the feed rollers (3, 4/7,8) is variable.

6. Apparatus according to one or more of claims 1 to 5, **characterised in that** the diverting rollers (5, 6) are driven.

7. Apparatus according to claim 6, **characterised in that** the diverting rollers (5, 6) are motor-driven in a constant or regulated manner.

8. Apparatus according to claim 7, **characterised in that** a motor is coupled to the diverting rollers (5, 6) in each case *via* a slip clutch.

9. Apparatus according to one or more of claims 1 to 5, **characterised in that** the diverting rollers (5, 6) are idler rollers.

10. Apparatus according to claim 9, **characterised in that**
the surfaces of the diverting rollers (5, 6) are of a construction maximised for friction.

11. Apparatus according to one or more of claims 1 to 10, **characterised in that** the spacing A of the diverting rollers (5, 6) is variable.

12. Apparatus according to one or more of claims 1 to 11, **characterised in that** the radius R of the diverting rollers (5, 6) is variable.

13. Apparatus according to any one of claims 1 to 12, **characterised in that** the band fanning-out devices (13, 14) have bores (13a, 14a) for receiving pins (13b, 14b).

## Revendications

1. Dispositif pour sectionner en tronçons de bande individuels un demi-produit en forme de bande avec des gorges s'étendant en direction longitudinale, constitué par un dérouleur (2) portant un rouleau (1) d'un demi-produit en forme de bande et par un dispositif de tirage (9, 10), deux paires de rouleaux d'approche (3, 4 / 7,8) étant agencées entre le dérouleur (2) et le dispositif de tirage (9, 10), dans lequel
- entre les deux paires de rouleaux d'approche (3, 4 /7, 8) est prévue une paire de poulies de renvoi (5, 6) agencées l'une au-dessus de l'autre pour dévier en sens contraire les zones de demi-produits délimitées par les paires de gorges, et les rubans de bande (1a, 1b, 1c, 1d) produits après un arrachement sont guidés en alternance au-dessus de la poulie de renvoi supérieure (5), et la zone voisine est guidée au-dessous de la poulie de renvoi inférieure (6),
**caractérisé en ce que**
- les poulies de renvoi (5, 6) peuvent être enfilées latéralement dans le dispositif, et **en ce que**
- entre les deux paires de rouleaux d'approche (3, 4 / 7, 8) sont agencés un dispositif fixe de mise en éventail de bande (14) inférieur et un dispositif mobile de mise en éventail de bande (13) supérieur qui s'engagent l'un dans l'autre à la manière d'un peigne.

2. Dispositif selon la revendication 1, **caractérisé en ce que** la distance de fente des rouleaux d'approche (3, 4 / 7, 8) est respectivement variable.

3. Dispositif selon la revendication 1 ou 2, **caractérisé en ce qu'**au moins un des deux rouleaux d'approche (3, 4 / 7, 8) peut être approché avec force variable par rapport à l'autre rouleau d'approche.

4. Dispositif selon la revendication 3, **caractérisé en ce que** la suspension des rouleaux d'approche (4, 8) a lieu via des leviers (11, 12), et l'application de force peut être choisie librement.

5. Dispositif selon l'une des revendications 1 à 4, **caractérisé en ce que** la position des poulies de renvoi (5, 6) entre les rouleaux d'approche (3, 4 / 7, 8) est variable.

6. Dispositif selon l'une ou plusieurs des revendications 1 à 5, **caractérisé en ce que** les poulies de renvoi (5, 6) sont entraînées.

7. Dispositif selon la revendication 6, **caractérisé en ce que** les poulies de renvoi (5, 6) sont entraînées par moteur de manière constante ou réglée.

8. Dispositif selon la revendication 7, **caractérisé en ce qu'**un moteur est accouplé aux poulies de renvoi (5, 6) via un accouplement à friction respectif.

9. Dispositif selon l'une ou plusieurs des revendications 1 à 5, **caractérisé en ce que** les poulies de renvoi (5, 6) sont rotatives de façon passive.

10. Dispositif selon la revendication 9, **caractérisé en ce que** les surfaces des poulies de renvoi (5, 6) sont réalisées en vue de maximiser la friction.

11. Dispositif selon l'une ou plusieurs des revendications 1 à 10, **caractérisé en ce que** la distance A entre les poulies de renvoi (5, 6) est variable.

12. Dispositif selon l'une ou plusieurs des revendications 1 à 11, **caractérisé en ce que** le rayon des poulies de renvoi (5, 6) est variable.

13. Dispositif selon l'une des revendications 1 à 12, **caractérisé en ce que** le dispositif de mise en éventail de la bande (13, 14) présente des perçages (13a, 14a) pour la réception de boulons (13b, 14b).
